# EUROPÄISCHE PATENTSCHRIFT

(11) **EP 1 177 485 B1**
(45) Veröffentlichungstag und Bekanntmachung des Hinweises auf die Patenterteilung: **26.04.2006**
(21) Anmeldenummer: 00938532.9
(22) Anmeldetag: 04.05.2000
(51) Int. Cl.: G05B 19/418

(54) **VERFAHREN ZUR PROZESSGESTEUERTEN UND KUNDENINDIVIDUELLEN HERSTELLUNG EINES GEGENSTANDES**
METHOD FOR PROCESS-CONTROLLED AND CLIENT-SPECIFIC PRODUCTION OF AN OBJECT
PROCEDE DE PRODUCTION D'UN OBJET SELON UN PROCESSUS COMMANDE ET EN FONCTION DES EXIGENCES INDIVIDUELLES D'UN CLIENT

(30) Priorität: 09.05.1999 DE 19921063
(43) Veröffentlichungstag der Anmeldung: 06.02.2002
(73) Patentinhaber: Lösch, Christoph, 90562 Heroldsberg (DE)
(72) Erfinder: Lösch, Christoph, 90562 Heroldsberg (DE)
(74) Vertreter: Lösch, Christoph Ludwig Klaus
(86) Internationale Anmeldenummer: PCT/DE2000/001392
(87) Internationale Veröffentlichungsnummer: WO 2000/068750

(56) Entgegenhaltungen:
- EP-A- 0 425 405
- EP-A- 0 793 922
- US-A- 5 515 268
- US-A- 5 546 316
- US-A- 5 570 292
- US-A- 5 726 898
- US-A- 5 768 135

## Beschreibung

Die Erfindung betrifft ein Verfahren zur prozeßgesteuerten Herstellung eines Gegenstandes mit den Merkmalen des Patentanspruchs 1. Ferner betrifii die Erfindung einen Gegenstand mit den Merkmalen des Oberbegriffs des Patentanspruchs 10.

Als Stand der Technik sind Verfahren zur prozeßgesteuerten Herstellung von Gegenständen, z.B. Konsum- oder Investitionsgütern, bekannt, bei denen z.B. bei der Herstellung eines Autos in einer hochkomplexen und spezialisierten Massenfertigung die einzelnen Komponenten von Zuliefern vorgefertigt und dann am Band des Autoherstellers nach und nach montiert werden. Dabei entspricht das hergestellte Auto einem Kundeneinzelauftrag entsprechend der vom Hersteller angebotenen festgelegten Varianten oder es wird aus marketingorientiereten Gründen ein Standardauto gefertigt, das auch ohne Kundeneinzelauftrag bei den Händlern vertrieben wird. Die heutige prozeßgesteuerte Massenherstellung ist kostengünstig und erlaubt auch die Realisierung einer gewissen, allerdings beschränkten Anzahl von vom Hersteller festgelegten Varianten bei der Verwirklichung von Kundenwünschen. So können Fahrzeuge in verschiedenen Farben und mit verschiedenen Ausstattungspaketen bestellt und hergestellt werden.

Eine Anpassung an konkrete individuelle Wünsche der Kunden kann jedoch aufgrund der relativ geringen Wandlungsbreite prozeßgesteuerter Herstellungsverfahren nicht realisiert werden.

Aus der US 5,546,316 ist ein interaktiver Verkaufsapparat bekannt, welcher es ermöglicht, eine große Vielzahl von personalisierten Produkten, wie z.B. Glückwunschkarten, nach Auswahl durch einen Kunden zu erstellen.

In der US 5,726,898 ist eine Vorrichtung und ein Verfahren beschrieben, welche die Speicherung, das Aufrufen und das Absenden von Dateninformationen betrifft. Dabei werden die Dateninformationen durch Angaben eines Kunden abgeändert. Abschließend können die Dateninformationen z.B. in Form eines Druckproduktes dem Kunden zugesandt werden.

Die US 5,570,292 betrifft ein integriertes System zur Auswahl, zur Bestellung und zur Herstellung von Kunstglasprodukten. Dabei kann ausgehend von einer Anzahl von Gestaltungsregeln ein individualisiertes Produkt hergestellt werden.

In der EP 0 425 405 A2 wird ein automatisiertes Kundeninformationssystem dargestellt, welches ein Auftragsannahmesystem zur Annahme von Kundenaufträgen mit einem Produktionsplanungssystem verbindet und integriert.

Der Erfindung liegt die Aufgabe zugrunde, ein Verfahren zur kostengünstigen Herstellung eines Gegenstandes anzubieten, der nicht im Herstellersortiment angeboten wird. Femer soll ein Gegenstand, der durch dieses Verfahren hergestellt wird, angeboten werden.

Beim erfindungsgemäßen Verfahren wird mindestens ein Prozeßdatensatz, der in einer Hersteller-Daten-Einheit zur Ansteuerung von Bearbeitungs-und/oder Preifeinrichtungen verwendet wird, durch einen Kundendatensatz ersetzt, ergänzt und/oder modifiziert.

Im Kundendatensatz sind vom Kunden gewünschte spezifische Eigenschaften des herzustellenden Gegenstandes enthalten. Indem der Kundendatensatz den Prozeßdatensatz ersetzt, ergänzt und/oder modifiziert, fließen die Daten des Kundendatensatzes in die Steuerung der Bearbeitungs-und/oder Prüfeinrichtungen ein, so daß dem hergestellten Gegenstand während der prozeßgesteuerten Herstellung die vom Kunden gemäß Kundendatensatz gewünschten Eigenschaften verliehen werden.

Insgesamt wird damit ermöglicht, daß bei einer prozeßgesteuerten Herstellung und einem fortlaufenden Herstellungsprozeß entweder vom Hersteller eingestellte Standardversionen gemäß vorliegender Prozeßdatensätze hergestellt werden oder - falls Kundendatensätze vorliegen - die Standardversionen der Gegenstände jeweils kundenindividuell gestaltet werden. Die Fertigung ist weiterhin kostengünstig organisiert und es können ohne Unterbrechung des Fertigungsflusses die Kundenwünsche ohne zeitliche Verzögerung umgesetzt werden. Es entsteht ein Gegenstand, der genau die vom Kunden gewünschten individuellen Eigenschaften gemäß dem Kundendatensatz aufweist und der damit vom Kunden angenommen und geschätzt wird.

Das erfindungsgemäße Verfahren ermöglicht es somit, kostengünstig in (Groß-)serie hergestellte Gegenstände kundengemäß zu individualisieren und damit sicher den Geschmack, die Wünsche und die Wertschätzung des Kunden zu erreichen. Hierdurch wird das Angebot des Herstellers direkt an die Kundenwünsche angepaßt, so daß nicht Gegenstände hergestellt werden, die vom Kunden gar nicht gewollt oder gewünscht werden.

Dabei ist unter dem Begriff "Kunde" insbesondere der Endabnehmer des hergestellten Gegenstandes zu verstehen, z.B. der Käufer des hergestellten Automobils, Kleidungsstücks oder sonstigen Gegenstandes.

Üblicherweise sind die Prozeßdatensätze, welche zur Ansteuerung der Bearbeitungs-/Prüfeinrichtungen (kurz: Herstellungsmaschinen) des Herstellers bei der Herstellung des Gegenstandes dienen, in einer internen Herstellerdatenbank konzentriert und von außen und insbesondere durch den Kunden ausdrücklich nicht zugänglich.

Gemäß herkömmlichen Herstellungsverfahrens erhält der Hersteller gerade bei hochkomplexen arbeitsteiligen Geräten und Produkten (z.B. Automobilen) einen Fertigungsauftrag von einem Händler, den der Händler mit dem Kunden zusammen ausgehandelt und festgelegt hat. Dann werden üblicherweise die Prozeßdatensätze der herstellerinternen Herstellerdatenbank entsprechend dem Einzelauftrag aktiviert und es wird das Auto in einer der festgelegten Varianten hergestellt, welche der Kunde beim Händler aus dem Prospekt ausgewählt hat.

Das erfindungsgemäße Verfahren ermöglicht es nun, daß der Kunde, hier also der Käufer des Fahrzeugs, direkt und ohne Umwege über Händler oder sonstige Zwischenstationen, über eine (definierte) Schnittstelle einen Zugang zur Herstellerdatenbank mit den dort abgelegten Prozeßdatensätzen erhält. Somit besitzt die eigentlich interne Herstellerdatenbank mindestens eine Schnittstelle, über die eine Verbindung zur Außenwelt, nämlich direkt zum Kunden ermöglicht wird.

Der Kundendatensatz wird über diese mindestens eine Schnittstelle der internen Herstellerdatenbank in die Herstellerdatenbank eingefügt und ersetzt, ergänzt und/oder modifiziert die dort vorhandenen Prozeßdatensätze, so daß der herzustellende Gegenstand nicht mehr gemäß den Standardprozeßdatensätzen hergestellt wird, sondern gemäß der Prozeßdatensätze, die durch den Kundendatensatz ersetzt, ergänzt und/oder modifiziert sind. Damit entsteht ein Gegenstand, der kundenindividuell hergestellt ist.

Konkret bedeutet dies z.B., daß ein Kunde, der über einen Kundendatensatz eine bestimmte Farbtönung des Innenraums des bestellten Automobils anstrebt, dies durch Einspielung des Kundendatensatzes in die interne Herstellerdatenbank über die (definierte) Schnittstelle erreichen kann.

Bei der Farbgestaltung des Innenraums, die z.B. durch Bedruckungsmaschinen erfolgen kann, werden nun die Kundeninformationen aus dem Kundendatensatz berücksichtigt und es wird der Innenraum direkt nach den Vorstellungen des Kunden gestaltet, also gefärbt oder getönt.

Sämtliche anderen Bereiche der Prozeßdatensätze, z.B. diejenigen Prozeßdatensätze, welche sicherheitsrelevante Teile des Automobils betreffen, bleiben unverändert.

Durch das erfindungsgemäße Verfahren wird es also ermöglicht, daß der Kunde einen vom Hersteller oder Zulieferer des Herstellers genau definierbaren partiellen Zugriff auf einzelne Datenfelder der Prozeßdatensätze erhält und diese kundenindividuell gestalten kann.

Die beschriebene Zusammenführung des Kundendatensatzes mit den Prozeßdatensätzen kann über eine Kundendateneinheit erfolgen, die über eine Datenleitung, z.B. online, mit der Hersteller-Daten-Einheit verbunden ist. Der Kunde kann so z.B. am eigenen Personalcomputer von zuhause aus Aufträge zur Herstellung eines Gegenstandes aufgeben, kundenindividuell gestalten und unter Umständen auch nachträglich ändern. Durch die direkte Verbindung mit der Hersteller-Daten-Einheit über mindestens eine Schnittstelle hat der Kunde einen ständigen Zugriff auf die Hersteller-Daten-Einheit in dem Umfang, indem dieser vom Hersteller ermöglicht wird.

Der Kundendatensatz kann nach einer Vorlage des Kunden mit Schrift-, Ton- und/oder Bildzeichen erstellt werden. So kann der Kunde selbst eine Graphik oder ein Stoffmuster erstellen, welches dann bei der Bedruckung des jeweiligen Stoffes beim Hersteller umsetzt wird. Nach einem anderen Beispiel kann der Kunde ein persönliches Fotomotiv in den Kundendatensatz aufnehmen und dann dieses Motiv zur Bedruckung von Kleidungsstükken oder z.B. zur Bedruckung des Zifferblatts einer Uhr in den fortlaufenden Herstellungsprozeß einfließen lassen.

Zur Erstellung des Kundendatensatzes kann der Kunde ausgehend z.B. von der Fotovorlage über Wandlungseinrichtungen, z.B. einen Scanner, in den Kundendatensatz und das erforderliche Datenformat gemäß der Schnittstellendefinition der Schnittstelle der Hersteller-Daten-Einrichtung transformiert werden.

Um die Sicherheit des Herstellungsprozesses zu gewährleisten, kann der Hersteller bestimmte sicherheitsrelevante oder aufgrund sonstiger Gesichtspunkte relevante Datenfelder im Prozeßdatensatz sperren und festlegen, welche Datenfelder durch den Kundendatensatz ersetzt, ergänzt oder modifiziert werden können. Ferner kann vom Hersteller festgelegt werden, welches Datenformat (z.B. Taktfrequenz, Kodierung etc.) vom Kunden verwendet werden muß, damit die als Kundendatensatz vorliegenden Daten über die Schnittstelle mit dem Prozeßdatensatz zusammengeführt werden können.

Gemäß einer weiteren Verfahrensvariante kann der Hersteller auch eine inhaltliche Prüfung des Kundendatensatzes durchführen und damit sicherstellen, daß die Eigenschaften des hergestellten Gegenstandes trotz der kundenindividuellen Gestaltung weiterhin der Produktphilosophie des Herstellers entsprechen.

Sämtliche Kontroll- und/oder Prüfvorgänge des Herstellers können aber auch entfallen oder automatisiert ablaufen, so daß der Kunde einen direkten Zugang zur Steuerung der Herstellungsmaschinen besitzt. So kann sich die Überprüfung des Herstellers auf einige automatisierte Abfragen im Zusammenhang mit dem Kundendatensatz beschränken (z.B. Liegt das richtige Datenformat vor?, Können die angegebenen Kundendaten überhaupt von den Herstellungsmaschinen umgesetzt werden ?) gestellt werden. Derartige Abfragen können aber auch vollständig entfallen.

Vom Kunden individuell bestimmte Eigenschaften zeichnen den erfindungsgemäßen Gegenstand aus. Damit wird ein prozeßgesteuert hergestellter Gegenstand weiterhin im fortlaufenden Produktionsprozeß kostengünstig hergestellt und kann dennoch die vom Kunden gewünschten individuellen Merkmale besitzen. Die Vorteile der Massenfertigung (geringe Kosten) werden mit den Vorteilen einer eher manuell geprägten Einzelanfertigung (exakte Berücksichtigung von Kundenwünschen) vereint.

Vorteilhafterweise können die vom Kunden individuell bestimmten Eigenschaften an der Oberfläche des Gegenstandes z.B. durch Beschriftung, Beschichtung oder sonstige auf- oder abtragende Oberflächengestaltung ausgebildet sein. Damit kann jeder in Großserie hergestellte Gegenstand optisch individuell nach den Vorstellungen des Kunden gestaltet werden.

In einer weiteren vorteilhaften Ausführungsform betreffen die kundenindividuellen Gestaltungsmerkmale den Inhalt eines Speicherbausteins des Gegenstandes, der mit mit kundenindividuellen Merkmalen versehen wird. So ist z.B. möglich, Gegenstände mit Sprachfunktionen (z.B. Kinderspielzeug), mit der Stimme des jeweiligen Kunden zu versehen, wodurch der Gegenstand individualisiert wird. Generell können vielfältige funktionale und/oder ästhetische Eigenschaften des herzustellenden Gegenstandes kundenindividuell ausgebildet werden.

Über die definierte Schnittstelle der Hersteller-Datenbank kann mindestens ein Prozeßdatensatz der Hersteller-Daten-Einheit des Herstellers durch Daten aus einem Kundendatensatz ergänzt werden. Im Gegensatz zur herkömmlichen Hersteller-Daten-Einheit, die ein geschlossenes Datensystem bilden, besitzt die erfindungsgemäße Hersteller-Daten-Einheit mindestens eine (definierte) Schnittstelle, die eine Verbindung zum Kunden zur Datenübermittlung oder zum Datenaustausch ermöglichen und es dem Kunden gestattet, gemäß vom Hersteller selbst gesetzten Grenzen direkt über die Zusammenfügung mit den herstellerinternen Prozeßdatensätzen die Herstellungsmaschinen anzusteuern, damit der hergestellte Gegenstand kundenindividuell gestaltet wird.

Die Hersteller-Daten-Einheit ist über Datenleitung (z.B. Internet) mit der Kunden-Daten-Einheit (z.B. einem Personalcomputer) verbunden. Die Kunden-Daten-Einheit kann beim Kunden zuhause, bei einer Verkaufsstätte des Herstellers oder bei einem Händler, aufgestellt sein. Im letzteren Fall kann durch den Händler auch eine Beratung des Kunden bei der Erstellung oder Verarbeitung der Vorlage für den Kundendatensatz geleistet werden. Wesentliches Merkmal ist insbesondere der direkte Zugriff der Kunden-Daten-Einheit in die Hersteller-Daten-Einheit und auf die Herstellungsmaschinen des Herstellers.

Der Kundendatensatz, welcher mit mindestens einem Prozeßdatensatz der Hersteller-Daten-Einheit zusammengerührt wird, kann eine Vielzahl von Daten umfassen, welche neben den Eigenschaften des herzustellenden Gegenstandes, also den Fertigungsdaten, auch Auftragsdaten und Kundendaten aufweisen kann. So kann mit dem Kundendatensatz auch erst ein Fertigungsauftrag beim Hersteller eingeleitet werden und es können dem Hersteller auch Personen- und Anschriftendaten des Kunden übermittelt werden, damit der kundenindividuell hergestellte Gegenstand dem Kunden auch direkt geliefert werden kann.

Unter "Gegenstand" ist in den Ansprüchen und der Beschreibung insbesondere ein nach einem Fertigungsverfahren hergestellter Gegenstand oder hergestelltes Teil zu verstehen. (zum Begriff "Fertigungsverfahren" vgl. z.B. "Taschenbuch für den Maschinenbau"/Dubbel, 16. Auflage, Springer-Verlag, 1987, Kapitel S "Fertigungstechnik").

Ferner ist unter "Gegenstand" in den Ansprüchen und der Beschreibung insbesondere ein nach einem verfahrenstechnischen Produktionsverfahren hergestellter Stoff (z.B. ein Arzneimittel oder ein Mittel zur Schönheitspflege) zu verstehen. (zum Begriff "Verfahrenstechnik" vgl. z.B. "Lexikon der Verfahrenstechnik"/Lueger, 4. Auflage, Deutsche Verlags-Anstalt GmbH, 1970, Stichwort "Verfahrenstechnik",S.541ff).

Weiteres Aspekte der Erfindung gehen aus den Ausführungsbeispielen in den Zeichnungsfiguren hervor. Es zeigen:
Fig. 1 eine Hersteller-Daten-Einheit nach dem Stand der Technik sowie
Fig. 2eine erfindungsgemäße Hersteller-Daten-Einheit und Kunden-Daten-Einheit.

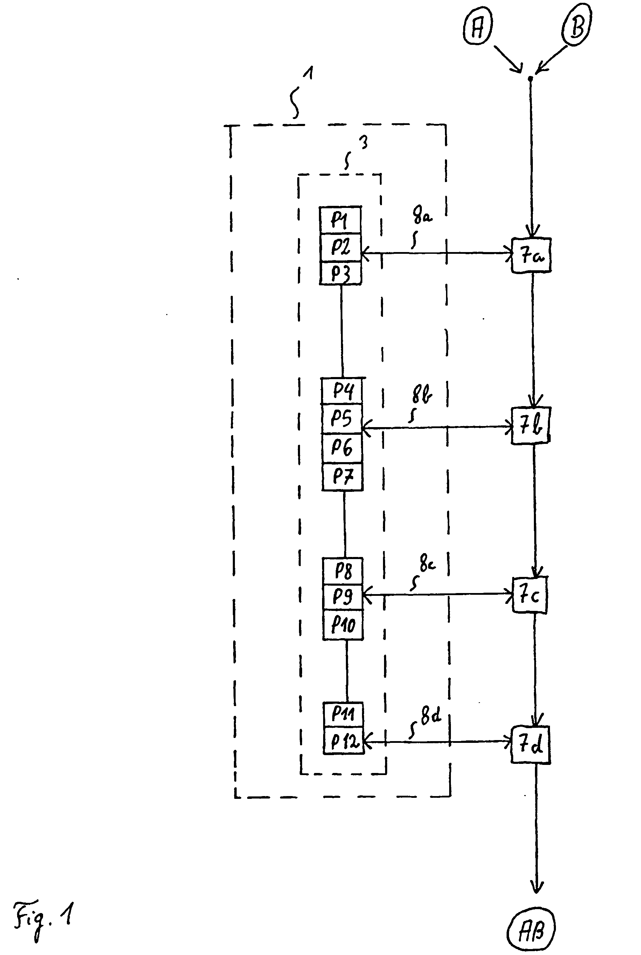

Fig. 1 zeigt eine Hersteller-Daten-Einheit 1, die sich üblicherweise am oder in der Nähe des Herstellungsortes des Gegenstandes oder an dem Ort befindet, an dem Zulieferfirmen des Herstellers angesiedelt sind. Die Hersteller-Daten-Einheit 1 weist eine Herstellerdatenbank mit mindestens einem Prozeßdatensatz 3 auf, der Prozeßdatenfelder P umfaßt. Über den Prozeßdatensatz 3 werden über Verbindungen 8 die Bearbeitungs-/Prüfeinrichtungen 7 angesteuert.

Bei der Herstellung des Gegenstandes wird von den Einzelkomponenten A und B ausgegangen, welche nach Durchlauf der Bearbeitungs-/Prüfeinrichtungen 7a - 7d den Gegenstand AB ergeben.

Ein herkömmlicher prozeßgesteuerter Herstellungsprozeß nach Fig. 1 wird nun anhand der Fertigung eines Mobiltelefons A mit einer Abdeckung B (Frontplatte) erläutert. Der geschilderte Herstellungsschritt umfaßt eine Bedruckung der Abdeckung B mit bestimmten im Prozeßdatensatz 3 des Herstellers vorhandenen Motiven. So wird die Abdeckung in einer Druckstation 7a mit Motiven gemäß den Prozeßdaten P1 - P3 bedruckt, um bei der Beschichtungsstation 7b noch mit einer Schutzschicht überzogen zu werden, deren Zusammensetzung, Dicke etc. gemäß den Prozeßdaten P4 - P7 festgelegt wird.

In der Montagestation 7c wird die bedruckte und beschichtete Abdeckung B mit dem vormontierten Mobiltelefon A verbunden. Dies geschieht gemäß den Prozeßdaten P8 - P10

Mit der abschließenden Prüfstation 7d wird gemäß den Prozeßdaten P11 und P12 überprüft, ob die Abdeckung korrekt auf dem Mobiltelefon befestigt ist und ob sämtliche gewünschte Qualitätsparameter eingehalten sind.

Abschließend entsteht das Produkt AB, nämlich ein Mobiltelefon mit motierter, bedruckter und beschichteter Abdeckung.

Bei diesem herkömmlichen prozeßgesteuerten Herstellungsprozeß kann die Abdeckung B nur mit bestimmten im Prozeßdatensatz 3 und damit in der internen Herstellerdatenbank vorhandenen Motiven bedruckt werden.

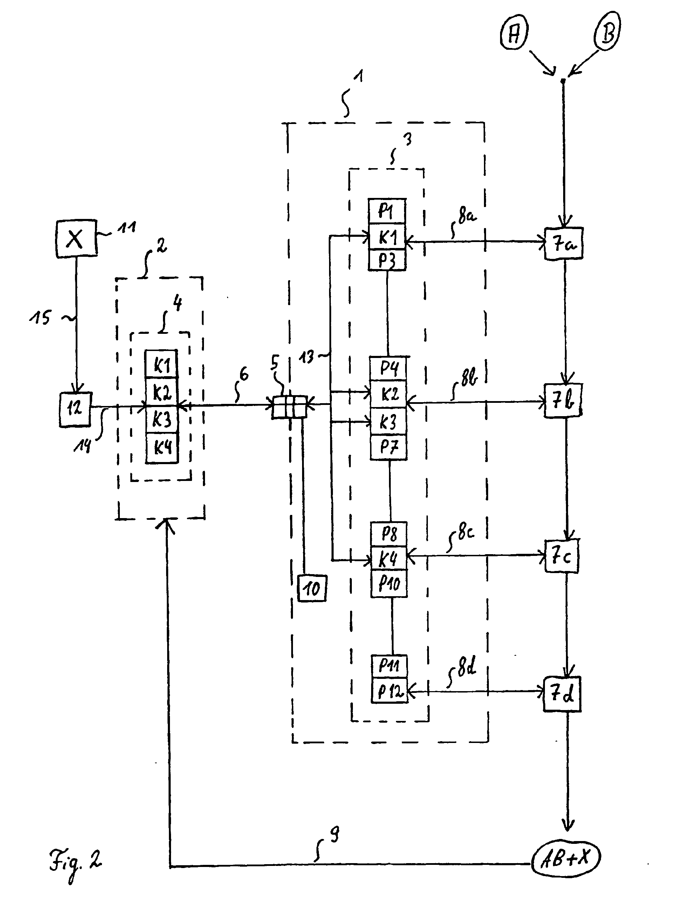

Aus Fig. 2 geht das erfindungsgemäße Verfahren hervor, welches es ermöglicht, Mobiltelefone A mit kundenindividuell bedruckten Abdeckplatten B+X prozeßgesteuert kostengünstig herzustellen. Im Unterschied zur Hersteller-Daten-Einheit 1 nach Fig. 1 besitzt die Hersteller-Daten-Einheit 1 nach Fig. 2 eine Schnittstelle 5, über die mittels Datenleitung 6 ein Kundendatensatz 4 zur Ergänzung des Prozeßdatensatzes 3 der Hersteller-Daten-Einheit 1 eingeleitet wird. Die Hersteller-Daten-Einheit 1 weist mehrere Prozeßdatensätze 3 auf, von denen aber nur ein einziger abgebildet ist, welche einzelne Teilprozeßdatensätze umfaßt, über welche die Bearbeitungs-und Prüfeinrichtungen 7a - d angesteuert werden.

In der Kunden-Daten-Einheit 2, z.B. einen Personalcomputer des Kunden und Endabnehmers, befindet sich ein Kundendatensatz 4 mit den Kundendaten K1 - K4. Der Kundendatensatz 4 trägt dabei die Merkmale einer Vorlage 11, z.B. eines Photos mit dem Motiv "X", welches über eine Wandlungseinrichtung, z.B. einen Scanner 12, datentechnisch aufbereitet und über die Verbindungen 14 und 15 zur Konfiguration des Kundendatensatzes 4 dient.

Wenn der Kunde nun ein Mobiltelefon bestellen will, welches ein kundenindividuelles Motiv X auf der Abdeckung B aufweisen soll, wären folgende Schritte durchzuführen:
1. Der Kunde erstellt in seiner Kunden-Daten-Einheit 2 den Kundendatensatz 4 mit den Kundendaten K1 - K4 mit den Merkmalen des Motivs "X".
2. Der Kunde wählt sich über die Datenleitung 6 und die Schnittstelle 5 in die Hersteller-Daten-Einheit 1 ein. Damit besteht eine Datenverbindung zwischen den Kunden-Daten-Einheit 2 und der Hersteller-Daten-Einheit 1, die als Online-Verbindung ausgebildet sein kann und Daten in einer oder in beiden Richtungen transportieren kann.
3. Nach der Schnittstelle 5 wird der Kundendatensatz 4 mit den kunden-daten K1 - K4 über die Verbindung 13 mit dem Prozeßdatensatz 3 verbunden. Es werden die bisherigen Prozeßdaten P2, P5, P6 und P9 durch die Kundendaten K1, K2, K3 und K4 ersetzt, ergänzt und/oder modifiziert. Nun kann eine prozeßgesteuerte Herstellung des Mobiltelefons A erfolgen, wobei die Abdeckung B mit dem kundenspezifischen Motiv X versehen wird. Dies geschieht an der Druckstation 7a durch die Kundendaten K1.
4. Nachfolgend wird das kundenindividuelle Motiv in der Beschichtungsstation 7b spezifisch beschichtet, falls dies erforderlich sein sollte, und zwar durch die Kundendaten K2 und K3.
5. In der Montagestation 7c befinden sich im zugehörigen Teilprozeßdatensatz die Daten P8, K4 und P10 zur Steuerung der Montagestation 7c, so daß auch hier kundenspezifisch gemäß den Kundendaten K4 montiert werden kann.
6. In der Prüfstation 7d wird das Endprodukt, nämlich das Mobiltelefon A, welches eine Abdeckung B mit dem Motiv X (also die Abdeckung B+X) besitzt, überprüft. Es wird festgestellt, ob die Druckqualität ausreichend ist und ob die Verbindung zwischen Abdeckplatte und Mobiltelefon korrekt hergestellt wurde. Auch in diesem Teilprozeßdatensatz, der aus den Prozeßdaten P11 und P12 besteht, könnten Kunden-daten K eingefügt werden, falls auch überprüft werden soll, ob das tatsächlich hergestellte Motiv X dem Motiv X auf der Vorlage 11 entspricht (nicht abgebildet).

Die Kundendaten K des Kundendatensatzes 4 werden somit an mehreren geeigneten Stellen mit dem Prozeßdatensatz 3 zusammengeführt, so daß ein prozeßgesteuert hergestellter Gegenstand entsteht, der die Wünsche des Kunden berücksichtigt und dabei auch sämtliche Qualitätsanforderungen des Herstellers erfüllt.

So kann der Kundendatensatz 4 auch Personen- und Anschriftangaben aufweisen, damit das entstehende Mobiltelefon AB+X durch eine Lieferung 9 dem Ort der Kunden-Daten-Einheit 2, also der Hausadresse des Kunden oder einer Händleradresse, zugestellt werden kann.

Über die Datenleitung 6 und die Schnittstelle 5 wird der Kundendatensatz 4 direkt zur Ansteuerung der Bearbeitungs-/Prüfeinrichtungen 7a - 7d verwendet. Es kann damit ein direkter Eingriff des Kunden in die Herstellung erfolgen.

Aus Sicherheitsgründen kann der Hersteller eine genaue datentechnische und/oder inhaltliche Definition der Schnittstelle 5 vorgeben, um nur entsprechend definierte und konfigurierte Kundendatensätze 4 zur Ergänzung mit dem ProzeBdatensatz 3 zuzulassen.

Femer kann in der Hersteller-Daten-Einheit 1 auch eine Kontrolleinrichtung 10 vorgesehen sein, über welche eine automatisierte oder persönliche Kommunikation mit der Kunden-Daten-Einheit 2 erfolgen kann, welche sich auf technische und nicht-technische Aspekte des übermittelten Kundendatensatzes 4 beziehen kann. Die Kontrolleinrichtung 10 ist aber nur eine mögliche Option. Über die Kontrolleinrichtung 10 kann, falls erforderlich oder gewünscht, die Datenleitung 6 auch teilweise oder völlig gesperrt werden.

Häufig wird bei der prozeßgesteuerten Massenherstellung von Gegenständen, insbesondere von Konsumgütern, vom Hersteller zunächst eine Standardproduktion mit einer begrenzten Anzahl von Standardversionen laufend hergestellt, um die Händler mit einer Grundausstattung zu versorgen. Die Erfindung ermöglicht es nun, die fortlaufende und kostengünstige optimierte prozeßgesteuerte Herstellung auf kundenindividuelle Modifikationen einzustellen, falls ein entsprechender Kundendatensatz 4 vorliegt.

Die Hersteller-Daten-Einheit 1 besitzt ein Abfragesystem, um festzustellen, ob ein Kundendatensatz 4 vorliegt. Falls dies nicht der Fall ist, werden Standardprodukte gemäß einer nach marketingpolitischen Erwägungen festgelegten Produktionsstrategie gewählt. So kann z.B. festgelegt werden, daß das Mobiltelefon üblicherweise mit einer roten, einer gelben und einer blauen Abdeckplatte produziert wird.

Wenn nun bei der Abfrage festgestellt wird, daß ein Kundendatensatz 4 vorliegt, wird bei der Druckstation 7a nicht die übliche Druckfarbe rot, gelb oder blau umgesetzt, sondern es wird die durch die Kundendaten K vorgegebene Motivvorgabe insbesondere ohne Umrüstung der Druckstation 7a automatisch und direkt umgesetzt. Diese Motiworgabe wird dann auch in der Prüfstation 7d auf ihre korrekte Applikation überprüft. Das Abfragesystem ist in Fig. 2 nicht abgebildet.

Mit der Erfindung kann die kostengünstige Massen- oder Großserienherstellung bereichsweise kundenindividuell ergänzt werden, so daß eine kostengünstige fortlaufende (Groß-)serienfertigung mit bisher nur aus einer eher manuell geprägten Einzelfertigung bekannten kundenindividuellen Realisierungen ermöglicht wird.

Neben dem angeführten Beispiel eines Mobiltelefons mit einer kundenindividuell gestalteten Abdeckung ergeben sich eine Fülle von Anwendungsmöglichkeiten für die Erfindung.

Es wird eine kundenindividuelle Bedruckung von Kleidungsstücken, Krawatten, Bettwäsche ermöglicht. Persönliche Flaschenetiketten oder Zifferblättern von Uhren können hergestellt werden. Es sind unterschiedliche und individuelle Strickmotive, Monogramme und sonstige Individualisierungen im Zusammenhang mit der Bekleidung denkbar. Gerade für Kinder können phantasievolle Kleidungsstücke erzeugt werden, so z.B. eine Bettwäsche mit Lieblingsmotiven der Kinder.

Das Fußbett und die Paßform von Schuhen kann entsprechend der jeweiligen konkreten anatomischen Vorgaben des Kunden gestaltet werden.

Auch das Design von Sportartikeln, z.B. Skateboards, Skiern etc. kann beliebig realisiert werden. Beim Design von Kommunikationsgeräten, z.B. Radios, Fernsehgeräten können individuelle Farben und Formen umgesetzt werden.

Auch bei der Bedruckung von Möbeln und der Realisierung von unterschiedlichsten Furnieren können z.B. bei Schrankwänden und Küchen alle denkbaren Motive angebracht werden.

Die Erfindung kann auch in beliebig komplexen arbeitsteiligen Prozessen verwendet werden und so z.B. zur individuellen Gestaltung der Innenräume von hergestellten Automobilen z.B. durch bestimmte Farbtöne oder Texturen eingesetzt werden. Ferner können z.B. in Automobilen an den Benutzer angepaßte Federstärken und Dämpfungsgrade in den Autositzen realisiert werden.

In Spielzeugartikeln kann auch eine Individualisierung erfolgen, indem z.B. Spielzeuge mit Sprachfunktionen (z.B. Teddybären) mit der Stimmfarbe des Kunden versehen werden. Der im Spielartikel eingebaute Speicherbaustein kann kundenindividuell programmiert werden.

Bei Produkten, welche aus einer Vermischung oder Kombination verschiedener Anteile bestehen (z.B. Kosmetika) können benutzerindviduelle Rezepturen oder Dosierungen der Zugabemengen einzelner Elemente verwirklicht werden. Auch eine unterschiedliche Formung von Teilen auf Bearbeitungsstationen, z.B. beim Fräsen und Drehen ist denkbar.

Zusammenfassend kann festgestellt werden, daß die Erfindung es dem Hersteller oder Zulieferer ermöglicht, die Wünsche des Kunden exakt zu erfüllen und dabei die Vorteile einer kostengünstigen prozeßgesteuerten Herstellung beizubehalten. Der Kunde kann seine Vorstellungen direkt in den Herstellungsprozeß des von ihm bestellten Gegenstandes einfügen. Es kann eine direkte Kommunikation zwischen dem Kunden und dem Hersteller stattfinden, ohne daß Zwischenstationen, z.B. Händler, Werbeagenturen etc., notwendig sind. Damit kann der Kunde auch Änderungswünsche umgehend dem Hersteller übermitteln, so daß diese zeitnah und direkt umgesetzt werden können.

## Patentansprüche

1. Verfahren zur prozeßgesteuerten fortlaufenden Herstellung eines Gegenstandes, z.B. eines Konsum- oder Investitionsgutes, für einen Kunden in mehreren Prozeßphasen, wobei beim Hersteller oder Zulieferer des Herstellers des Gegenstandes mehrere Prozeßphasen, z.B. Fertigung, Montage, Qualitätskontrolle oder Versand vorgesehen sind und durch Bearbeitungs- oder Prüfeinrichtungen durchgeführte Arbeitsschritte zur allmählichen Herstellung des Gegenstandes in den einzelnen Prozeßphasen gemäß mindestens einem zugeordneten Prozeßdatensatz (3) einer Hersteller-Daten-Einheit (1) ablaufen, und wobei
- mindestens ein Kundendatensatz (4) erstellt wird, der vom Kunden gewünschte spezifische Eigenschaften z.B. Farbe, Form, Funktion des herzustellenden Gegenstandes beinhaltet und Kundendaten enthält, welche nicht in dem Prozeßdatensatz (3) der Hersteller-Daten-Einheit (1) enthalten sind, wobei der Kundendatensatz (4) mindestens einen Prozeßdatensatz (3) der Hersteller-Daten-Einheit (1) derartig ersetzt oder modifiziert, daß der durch die resultierenden ersetzten oder modifizierten Arbeitsschritte hergestellte Gegenstand die vom Kunden bestimmten spezifischen Eigenschaften verliehen bekommt,
- die Hersteller-Daten-Einheit (1) über ein Abfragesystem feststellt, ob ein Kundendatensatz (4) vorliegt und
- der herzustellende Gegenstand im fortlaufenden Herstellungsprozeß bei Nichtvorliegen eines Kundendatensatzes (4) als vom Hersteller eingestellte Standardversion gemäß einem unveränderten Prozeßdatensatz (3) der Hersteller-Daten-Einheit (1) und bei Vorliegen eines Kundendatensatz (4) individuell vom Kunden gestaltet gemäß dem vom Kundendatensatz (4) ersetzten oder modifizierten Prozeßdatensatz (3) der Hersteller-Daten-Einheit (1) hergestellt wird.

2. Verfahren nach Anspruch 1,
wobei
der Kundendatensatz (4) über mindestens eine Schnittstelle (5) eine aus mindestens einem Prozeßdatensatz (3) gebildete interne Herstellerdatenbank des Herstellers oder mindestens eines Zulieferers des Herstellers des Gegenstandes ergänzt.

3. Verfahren nach Anspruch 2,
wobei
über die Schnittstelle (5) eine Datenverbindung mit einer dem Kunden zugeordneten Kunden-Daten-Einheit (2) zur automatischen Ergänzung des Prozeßdatensatzes (3) der Hersteller Daten-Einheit (1) durch den Kundendatensatz (4) und zur direkten Ansteuerung der Bearbeitungs- und/oder Prüfeinrichtungen (7) beim Hersteller oder Zulieferer hergestellt wird.

4. Verfahren nach einem der Ansprüche 1 - 3,
wobei
der Kundendatensatz (4) nach einer Vorlage (11) des Kunden erstellt wird.

5. Verfahren nach Anspruch 4,
wobei
die Vorlage (11) Schrift-, Ton- oder Bildzeichen (z.B. einen Text, eine Stimmenaufzeichnung, ein Photo etc.) aufweist.

6. Verfahren nach Anspruch 4 oder 5,
wobei
die Vorlage (11) des Kunden durch Wandlungseinrichtungen, z.B. einen Scanner, digitalisiert und in das Datenformat der Schnittstelle (5) der Hersteller-Daten-Einheit (1) transformiert wird.

7. Verfahren nach einem der Ansprüche 1 - 6,
wobei
die für die Einfügung des Kundendatensatzes (4) vorgesehenen Datenfelder im Prozeßdatensatz (3) gesperrt und/oder hinsichtlich der Definition der Schnittstelle (5), z.B. Datenformat, Datenumfang, modifiziert werden.

8. Verfahren nach einem der Ansprüche 1 - 7,
wobei
eine inhaltliche oder technische Überprüfung des Kundendatensatzes (4) vor der Ergänzung mit dem internen Prozeßdatensatz (3) durchgeführt wird.

9. Verfahren nach einem der Ansprüche 1 - 8,
wobei
ein fortlaufender Herstellungsprozesses eines in einer Standardversion hergestellten Gegenstandes gemäß den Vorgaben des Kundendatensatzes (4) ergänzt oder modifiziert wird.

10. Gegenstand, z.B. Konsum- oder Investitionsgut, der in einem fortlaufenden Herstellungsprozesses in Serienfertigung für einen Kunden durch ein Verfahren nach einem der Ansprüche 1 - 9 hergestellt wird,
**dadurch gekennzeichnet, daß**
der Gegenstand AB+X mindestens eine vom Kunden individuell bestimmte Eigenschaft X aufweist, wobei die Eigenschaft X Merkmale eines Kundendatendatensatzes (4) trägt, der über eine Schnittstelle (5) in eine Hersteller-Dateneinheit (1) zur Ersetzung oder Modifikation eines Prozeßdatensatzes (3) im fortlaufenden Herstellungsprozeß zur Herstellung des Gegenstandes einleitbar ist.

11. Gegenstand nach Anspruch 10,
**dadurch gekennzeichnet, daß**
die vom Kunden individuell bestimmte Eigenschaft X an einer Oberfläche des Gegenstandes AB+X, z.B. durch eine Beschriftung, Beschichtung oder sonstige Oberflächengestaltung, ausgebildet ist.

12. Gegenstand nach Anspruch 10 oder 11,
**dadurch gekennzeichnet, daß**
die kundenindividuell bestimmte Eigenschaft X den Inhalt eines Speicherbausteins des Gegenstandes AB+X zur Steuerung von Funktionen, z.B. einer Sprachfunktion des Gegenstandes AB+X, betrifft.

13. Gegenstand nach einem der Ansprüche 10 - 12,
**dadurch gekennzeichnet, daß**
der Gegenstand AB funktionale und/oder ästhetische Eigenschaften gemäß einem Kundendatensatz (4) aufweist.

## Claims

1. Method for process-controlled and ongoing production of an object, for example of a consumer good or investment good, for a customer in a plurality of process phases, wherein a plurality of process phases, for example fabrication, assembly, quality control or shipping are provided at the manufacturer or supplier to the manufacturer, and working steps carried out by processing or testing units for the general manufacture of the object run in the individual process phases according to at least one assigned process data record (3) of a manufacturer data unit (1), and wherein
- at least one customer data record (4) is produced which contains specific properties desired by the customer, for example colour, design, function of the object to be manufactured, and includes customer data which is not contained in the process data record (3) of the manufacturer data unit (1), wherein the customer data record (4) replaces or modifies at least one process data record (3) of the manufacturer data unit (1) in such a way that the object which is manufactured by the resulting replaced or modified working steps assumes the specific properties determined by the customer,
- the manufacturer data unit (1) determines by means of an interrogation system whether a customer data record (4) is present and
- when a customer data record (4) is not present, the object which is to be manufactured is manufactured in the ongoing manufacturing process as a standard version which is set by the manufacturer, in accordance with an unchanged process data record (3) of the manufacturer data unit (1), and when a customer data record (4) is present the object which is to be manufactured is manufactured in a way which is configured specifically by the customer in accordance with the process data record (3), replaced or modified by the customer data record (4), of the manufacturer data unit (1).

2. Method according to Claim 1,
wherein the customer data record (4) supplements, by means of at least one interface (5), an internal manufacturer database of the manufacturer or at least one supplier to the manufacturer of the object, which database is formed from at least one process data record (3).

3. Method according to Claim 2,
wherein a data link is set up via the interface (5) to a customer data unit (2), assigned to the customer, for automatically supplementing the process data record (3) of the manufacturer data unit (1) by means of the customer data record (4), and for directly actuating the processing and/or testing devices (7) at the premises of the manufacturer or supplier.

4. Method according to one of Claims 1-3,
wherein the customer data record (4) is created in accordance with a schedule of specifications (11) of the customer.

5. Method according to Claim 4,
wherein the schedule of specifications (11) has lettering, sound data or image symbols (for example a text, a voice recording, a photo etc.).

6. Method according to Claim 4 or 5,
wherein the schedule of specifications (11) of the customer is digitized by means of conversion devices, for example a scanner, and is transformed into the data format of the interface (5) of the manufacturer data unit (1).

7. Method according to one of Claims 1-6,
wherein the data fields in the process data record (3) which are provided for the insertion of the customer data record (4) are blocked and/or modified with respect to the definition of the interface (5), for example data format, scope of data.

8. Method according to one of Claims 1-7,
wherein checking of the contents, or technical checking, of the customer data record (4) is carried out before the internal process data record (3) is added.

9. Method according to one of Claims 1-8,
wherein an ongoing manufacturing process of an object which is manufactured in a standard version is supplemented or modified according to the specifications of the customer data record (4).

10. Object, for example consumer good or investment good, which is manufactured in an ongoing manufacturing process using series fabrication for a customer by means of a method according to one of Claims 1-9, **characterized in that** the object AB+X has at least one property X which is determined specifically by the customer and which has features of a customer data record (4) which can be fed via an interface (5) into a manufacturer data unit (1) for replacing or modifying a process data record (3) during the ongoing manufacturing process for manufacturing the object.

11. Object according to Claim 10, **characterized in that** the property X which is determined specifically by the customer is formed on a surface of the object AB+X, for example by inscription, coating or some other surface processing method.

12. Object according to Claim 10 or 11, **characterized in that** the property X which is determined on a customer-specific basis relates to the content of a memory module of the object AB+X for controlling functions, for example a speech function of the object AB+X.

13. Object according to one of Claims 10-12, **characterized in that** the object AB has functional and/or aesthetic properties according to a customer data record (4).

## Revendications

1. Procédé pour la production en continu commandée par un processus d'un objet, par exemple un produit de consommation ou d'investissement, pour un client, en plusieurs phases de processus, dans lequel, chez le fabricant ou le fournisseur du fabricant de l'objet, plusieurs phases de processus, par exemple fabrication, montage, contrôle de la qualité ou expédition, sont prévues et des étapes de travail effectuées par des dispositifs de traitement ou de vérification, pour la fabrication progressive de l'objet dans les différentes phases de processus, se déroulent selon au moins un ensemble de données de processus associé (3) d'une unité de données fabricant (1), et dans lequel
- au moins un ensemble de données client (4) est créé, lequel contient des propriétés spécifiques souhaitées par le client, par exemple la couleur, la forme, la fonction de l'objet à fabriquer, et contient des données client qui ne sont pas contenues dans l'ensemble de données de processus (3) de l'unité de données fabricant (1), l'ensemble de données client (4) remplaçant ou modifiant au moins un ensemble de données de processus (3) de l'unité de données fabricant (1) de telle sorte que les propriétés spécifiques déterminées par le client soient conférées à l'objet fabriqué par les étapes de travail résultantes, remplacées ou modifiées,
- l'unité de données fabricant (1) établit, par le biais d'un système d'interrogation, s'il existe un ensemble de données client (4) et
- l'objet à fabriquer est fabriqué suivant un processus de fabrication continu en l'absence d'un ensemble de données client (4) sous la forme d'une version standard établie par le fabricant selon un ensemble de données de processus non modifiées (3) de l'unité de données fabricant (1), et en présence d'un ensemble de données client (4) configuré individuellement par le client, selon l'ensemble de données de processus (3) de l'unité de données fabricant (1), modifié ou remplacé par l'ensemble de données client (4).

2. Procédé selon la revendication 1,
dans lequel
l'ensemble de données client (4), par le biais d'au moins une interface (5), complète une banque de données fabricant interne, formée à partir d'au moins un ensemble de données de processus (3), du fabricant ou au moins d'un fournisseur du fabricant de l'objet.

3. Procédé selon la revendication 2,
dans lequel
l'interface (5) permet de créer une liaison de données avec une unité de données client (2) associée au client pour compléter automatiquement l'ensemble de données de processus (3) de l'unité de données fabricant (1) par l'ensemble de données client (4) et pour la commande directe des dispositifs de traitement et/ou de vérification (7) chez le fabricant ou le fournisseur.

4. Procédé selon l'une quelconque des revendications 1 à 3,
dans lequel
l'ensemble de données client (4) est créé selon un original (11) fourni par le client.

5. Procédé selon la revendication 4,
dans lequel
l'original (11) présente des symboles écrits, audio ou sous forme d'image (par exemple un texte, un enregistrement vocal, une photographie, etc.).

6. Procédé selon la revendication 4 ou 5,
dans lequel
l'original (11) du client est numérisé par des dispositifs de conversion, par exemple un scanner, et est transformé en le format de données de l'interface (5) de l'unité de données fabricant (1).

7. Procédé selon l'une quelconque des revendications 1 à 6,
dans lequel
les champs de données prévus dans l'ensemble de données de processus (3) pour l'insertion de l'ensemble de données client (4) sont bloqués et/ou modifiés en termes de la définition de l'interface (5), par exemple du format de données, de l'ampleur des données.

8. Procédé selon l'une quelconque des revendications 1 à 7,
dans lequel
une vérification du contenu ou une vérification technique de l'ensemble des données client (4) est effectuée avant de le compléter par l'ensemble de données de processus interne (3).

9. Procédé selon l'une quelconque des revendications 1 à 8,
dans lequel
un processus de fabrication continu d'un objet fabriqué en version standard est complété ou modifié selon les indications de l'ensemble de données client (4).

10. Objet, par exemple objet de consommation ou d'investissement, qui est fabriqué dans un processus de fabrication continu en série pour un client par un procédé selon l'une quelconque des revendications 1 à 9,
**caractérisé en ce que**
l'objet AB+X présente au moins une propriété X déterminée individuellement par le client, la propriété X portant des caractéristiques d'un ensemble de données client (4) qui peut être introduit par le biais d'une interface (5) dans une unité de données fabricant (1) pour remplacer ou modifier un ensemble de données de processus (3) dans un processus de fabrication continu pour la fabrication de l'objet.

11. Objet selon la revendication 10,
**caractérisé en ce que**
la propriété X déterminée individuellement par le client est réalisée sur une surface de l'objet AB+X, par exemple par une inscription, un revêtement ou une autre configuration de surface.

12. Objet selon la revendication 10 ou 11,
**caractérisé en ce que**
la propriété X déterminée individuellement par le client concerne le contenu d'un module de mémoire de l'objet AB+X pour la commande de fonctions, par exemple d'une fonction vocale de l'objet AB+X.

13. Objet selon l'une quelconque des revendications 10 à 12,
**caractérisé en ce que**
l'objet AB présente des propriétés fonctionnelles et/ou esthétiques conformément à un ensemble de données client (4).
